# EUROPEAN PATENT SPECIFICATION

(11) **EP 0 808 740 B1**
(45) Date of publication and mention of the grant of the patent: **23.04.2003**
(21) Application number: 97108288.8
(22) Date of filing: 22.05.1997
(51) Int. Cl.: B60N 2/16

(54) **Seat lift mechanism in automotive vehicle**
Höhenverstellvorrichtung eines Sitzes eines Kraftfahrzeuges
Mécanisme de réglage de la hauteur d'un siège de véhicule automobile

(30) Priority: 22.05.1996 JP 12748896; 22.05.1996 JP 12749396; 19.06.1996 JP 15860096
(43) Date of publication of application: 26.11.1997
(73) Proprietor: Toyooki Kogyo Kabushiki Kaisha, Aichi-ken (JP); ARACO KABUSHIKI KAISHA, Toyota-shi, Aichi-ken (JP)
(72) Inventor: Koyanagi, Hiroki, Okazaki-shi, Aichi-ken (JP); Tamaki, Kenji, Okazaki-shi, Aichi-ken (JP); Hirakawa, Toyokichi, Toyohashi-shi, Aichi-ken (JP); Kawai, Yoshikazu, Hazu-gun, Aichi-ken (JP); Kakoi, Koji, Okazaki-shi, Aichi-ken (JP); Takeda, Fumiaki, Toyota-shi, Aichi-ken (JP); Orito, Hiroshi, Toyota-shi, Aichi-ken (JP); Sei, Nobuo, Toyota-shi, Aichi-ken (JP)
(74) Representative: Blumbach, Kramer & Partner GbR

(56) References cited:
- WO-A-98/43849
- US-A- 4 600 239
- US-A- 5 524 952
- PATENT ABSTRACTS OF JAPAN vol. 1996, no. 09, 30 September 1996 (1996-09-30) & JP 08 113073 A (TOYOTA AUTO BODY CO LTD), 7 May 1996 (1996-05-07) & JP 08 113073 A (TOYOTA AUTO BODY) 7 May 1996 (1996-05-07)
- PATENT ABSTRACTS OF JAPAN vol. 1995, no. 07, 31 August 1995 (1995-08-31) & JP 07 089382 A (WAKO KOGYO KK), 4 April 1995 (1995-04-04)

## Description

The present invention relates to a seat lift mechanism for an automotive vehicle, and more particularly to a seat lift mechanism constructed to move a passenger seat from a seating position in the passenger compartment of the vehicle to and from a lower position adjacent a ground surface outside the passenger compartment through a side door opening of the vehicle (see, for example, the abstract of JP 08 113 073 (A), corresponding to the preamble of claim 1).

Disclosed in Japanese Patent Laid-open Publication No. 7(1995)-89382 is a seat lift mechanism for an automotive vehicle which comprises a slide mechanism for moving a passenger seat placed in a sideways position to and from a forward position and a lift mechanism for lowering the seat from the forward position to a lower position adjacent a ground surface through a side door opening of the vehicle and lifting the seat up to the forward position from the lower position.

The slide mechanism includes a swivel base rotatively mounted on the compartment floor, a pair of parallel rail members fixedly mounted on the swivel base at opposite sides thereof and a slide frame slidably supported on the rail members and placed at a backward position on the swivel base for horizontal movement in a predetermined distance toward the forward position when the swivel base is placed in the sideways position where a front of the swivel base is oriented toward the side door opening, and the lift mechanism includes a lift rack mounted on the slide frame for support of a passenger seat mounted thereon, a linkage mechanism mounted on the slide frame behind a back rest of the passenger seat and operatively connecting the lift rack to the slide frame for lowering the lift rack and seat from the forward position to the lower position through the side door opening and lifting the lift rack and seat up to the forward position from the lower position, and actuator means operatively connected to the linkage mechanism for actuating movement of the lift rack between the forward position and the lower position.

In the seat lift mechanism described above, the back rest of the passenger seat may not be tilted backward due to the linkage mechanism, and a large space behind the back rest of the seat is required for mounting the linkage mechanism and actuator means. As the slide frame and all the component parts of the lift mechanism are moved in an entire stroke when the passenger seat is moved from the backward position to and from the forward position, a large effort is required for movement of the passenger seat.

The above-mentioned Patent Abstracts of Japan, Vol. 1996, No. 9, dated 30 September 1996, corresponding to JP 08 113073 (A), discloses a seat lift mechanism for an automotive vehicle, wherein an elevating device is embeddingly provided in a rear seat floor steppedly equipped ordinarily in a front floor, wherein on this elevating device a nursing seat and a physically handicapped person seat are rotatably equipped with a rotating device in parallel. Between both the seats on a space between guide rails, a runner member and a slide cover are being housed underneath of a floor board installed on the same surface as the front floor.

It is, therefore, a primary object of the present invention to provide a seat lift mechanism for an automotive vehicle wherein slide and lift mechanisms are arranged in such a manner that the back rest of the passenger seat can be tilted backward and that the slide mechanism can be moved by a small effort applied thereto when it is desired to move the passenger seat to and from the forward position.

A secondary object of the present invention is to provide a seat lift mechanism for an automotive vehicle wherein when the passenger seat is retracted from the forward position, the lift mechanism is moved backward with the passenger seat to provide a sufficient space at a side door opening of the vehicle thereby to facilitate getting in and out of the vehicle.

The above objects are achieved by the seat lift mechanism according to claim 1. Further developments of the present invention are set forth in the dependent claims.

For a better understanding of the present invention, and to show how the same may be carried into effect, reference will now be made, by way of example, to the accompanying drawings, in which:
Fig. 1 is a plan view illustrating a van-type automotive vehicle equipped with a seat lift mechanism in accordance with the present invention;
Fig. 2 is a side view of the seat lift mechanism in a condition where a passenger seat is placed in a sideways position on a compartment floor of the vehicle;
Fig. 3 is a plan view of the seat lift mechanism in a condition where the passenger seat has been removed from a seat support plate shown in Fig. 2;
Fig. 4 is a partly broken front view of the seat lift mechanism shown in Fig. 2;
Fig. 5 is a partly broken rear view of the seat lift mechanism shown in Fig. 2;
Fig. 6 is a sectional view taken along line 6-6 in Fig. 4;
Fig. 7 is a sectional view taken along line 7-7 in Fig. 4;
Fig. 8 is an enlarged sectional view of a locking mechanism shown in Fig. 5;
Fig. 9 is a sectional view taken along line 9-9 in Fig. 2;
Fig. 10 is a plan view of the seat lift mechanism shown in Fig. 3 in a condition where the seat support plate and an upper support plate have been moved forward in a slight distance;
Fig. 11 is a partly broken rear view of the seat lift mechanism shown in Fig. 10;
Fig. 12 is a side view of the seat lift mechanism in a condition where the passenger seat has been moved forward;
Fig. 13 is a sectional view taken along line 13-13 in Fig. 12;
Fig. 14 is a side view of the seat lift mechanism in a condition where the passenger seat has been lowered;
Fig. 15 is a side view of the seat lift mechanism in a condition where the passenger seat has been moved backward to be placed in the sideways position on the compartment floor of the vehicle; and
Fig. 16 is a sectional view taken along line 16-16 in Fig. 15.

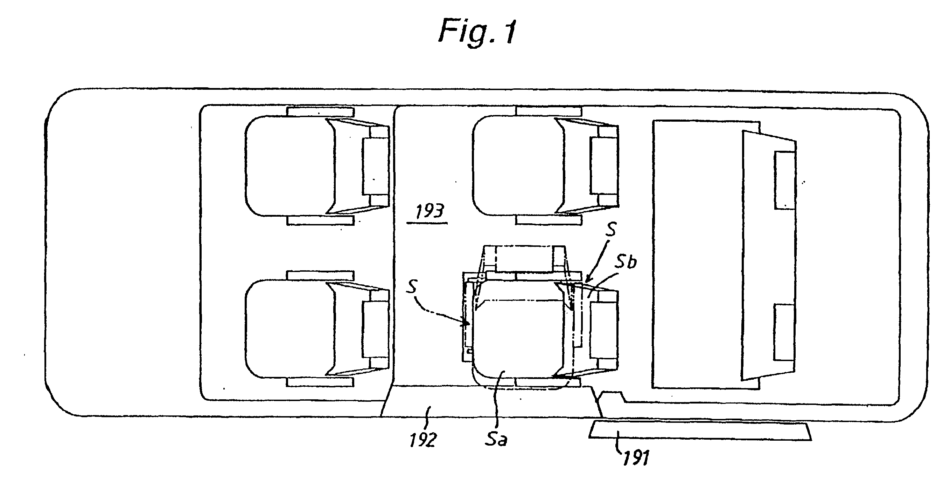

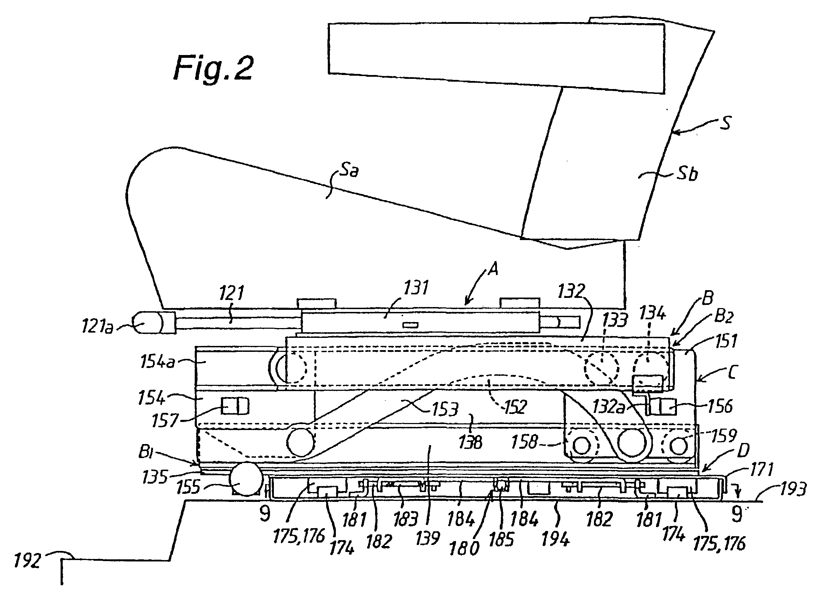

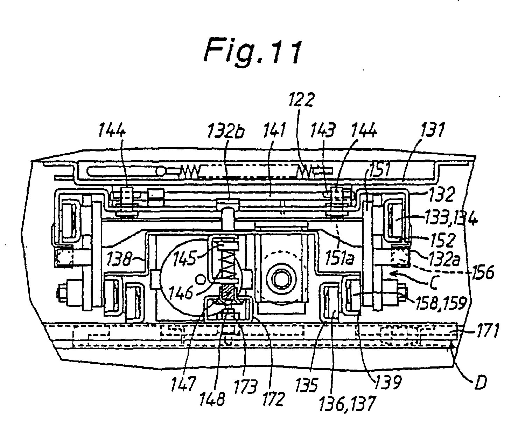

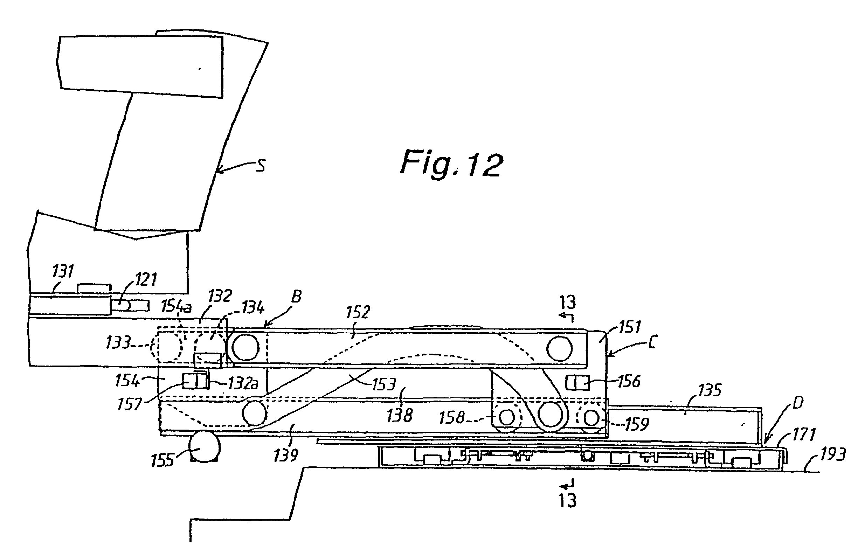

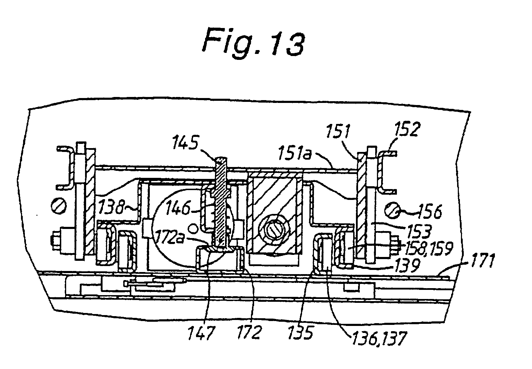

Hereinafter, a preferred embodiment of the present invention will be described with reference to Figs. 1-16 of the drawing. Illustrated in Fig. 1 is a van-type automotive vehicle equipped with a passenger seat S mounted on a seat lift mechanism according to the present invention. The passenger seat S is placed on a compartment floor 193 inside a side door opening 192 of the vehicle to be closed or opened by a slide door 191. As shown in Figs. 2 and 12, the seat lift mechanism includes a seat support mechanism A capable of rotating the passenger seat S from a forward-facing position shown by solid lines in Fig. 1 to a sideways position shown by two-dots and dash lines at an angle of 90 degrees in a counterclockwise direction and for further rotating the passenger seat S from the sideways portion to a backward-facing position at an angle of 90 degrees in a counterclockwise direction, a slide mechanism B capable of moving the passenger seat S placed in the sideways position forward or backward in a lateral direction of the vehicle, a lift mechanism C capable of lowering and lifting the passenger seat S at the sideways position, and a shift mechanism D capable of displacing the seat S with the seat support mechanism A, slide mechanism B and lift mechanism C in a predetermined distance in a fore-and-aft direction of the vehicle.

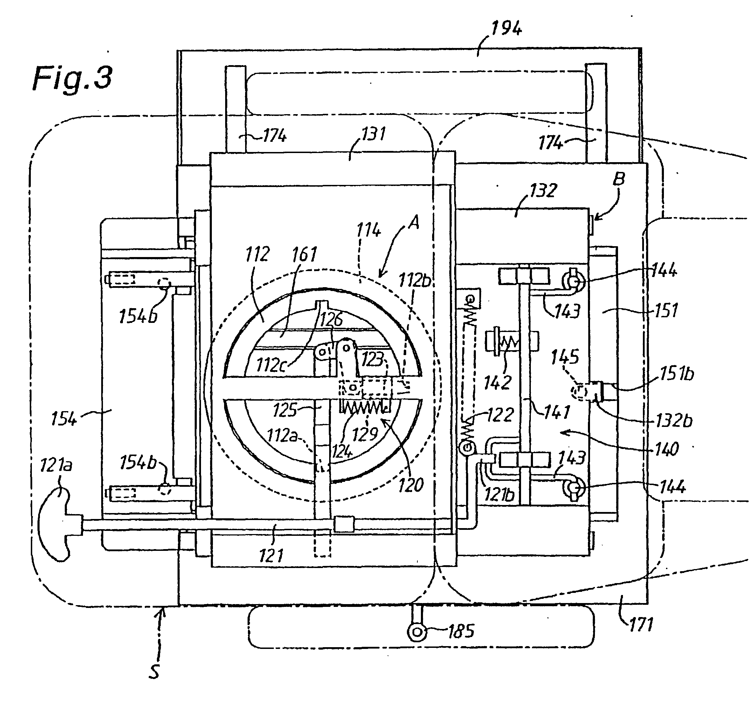

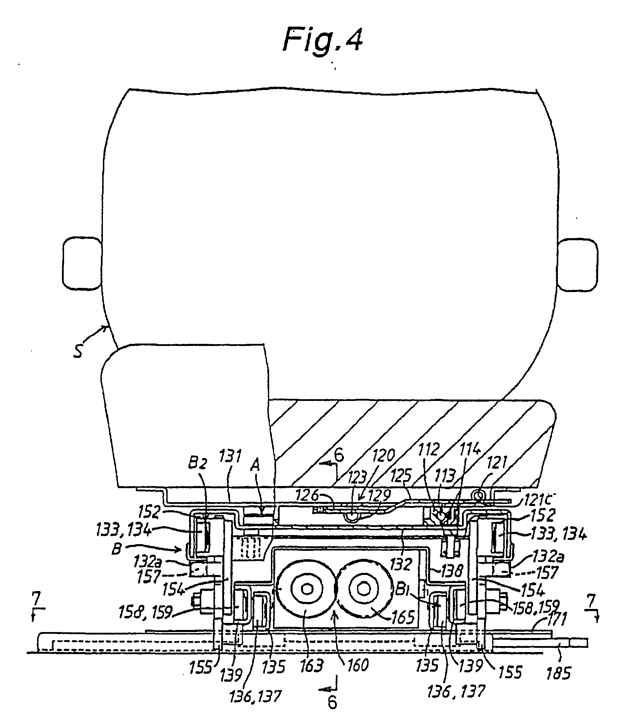

As shown in Figs. 2-5, the seat support mechanism A includes a stationary ring 112 fixed to an upper support plate 132 of the slide mechanism B (see Figs. 3 and 4), a rotary ring 114 fixed to a support plate 131 of the seat S and rotatively coupled with the stationary ring 112 through a ball bearing 113, and a seat locking mechanism 120 for releasably locking the seat S to the upper support plate 132 at the forward-facing position, the sideways position or the backward-facing position. With the seat support mechanism A, the seat S can be rotated about the rotary ring 114 in a released condition of the locking mechanism 120.

As shown in Figs. 3 and 4, the seat locking mechanism 120 includes a handle shaft 121 rotatably mounted on the seat support plate 131, a balance spring 122 engaged at its opposite ends with the handle shaft 121 and seat support plate 131 to retain the handle shaft 121 in a neutral position where a grip portion 121a of handle shaft 121 is placed in a horizontal plane, a lock pin 123 movably carried by a sleeve 129 secured to a bottom surface of the seat support plate 131 for engagement with circumferentially spaced recesses 112a, 112b and 112c formed on an inner periphery of the stationary ring 112, a coil spring 124 engaged at its opposite ends with the lock pin 123 and the seat support plate 131 for biasing the lock pin 123 toward the inner periphery of stationary ring 112, a link member 125 movably mounted on the seat support plate 131 to be moved by engagement with a projection 121c formed on an intermediate portion of handle shaft 121 when the handle shaft 121 is rotated in a clockwise direction in Fig. 4, and a bell crank 126 pivotally mounted on the seat support plate 131 and connected at one end thereof with the link member 125 and at the other end thereof with the lock pin 123.

When the handle shaft 121 of the seat locking mechanism 120 is retained in the neutral position as shown in Figs. 2 and 3, the lock pin 123 is engaged with either one of the recesses 112a, 112b or 112c under the load of spring 124 to retain the seat support plate 131 in place relative to the upper support plate 132 thereby to lock the seat S at the forward-facing position, the sideways position or the backward-facing position. When the grip portion 121a of handle shaft 121 is rotated in a clockwise direction in Fig. 4, the lock pin 123 is moved by the bell crank 126 against the load of spring 124 and disengaged from the recess 112a, 112b or 112c of stationary ring 112 to permit rotation of the seat support plate 131 relative to the upper support plate 132. Thus, the seat S can be rotated among the forward-facing position, the sideways position and the backward-facing position.

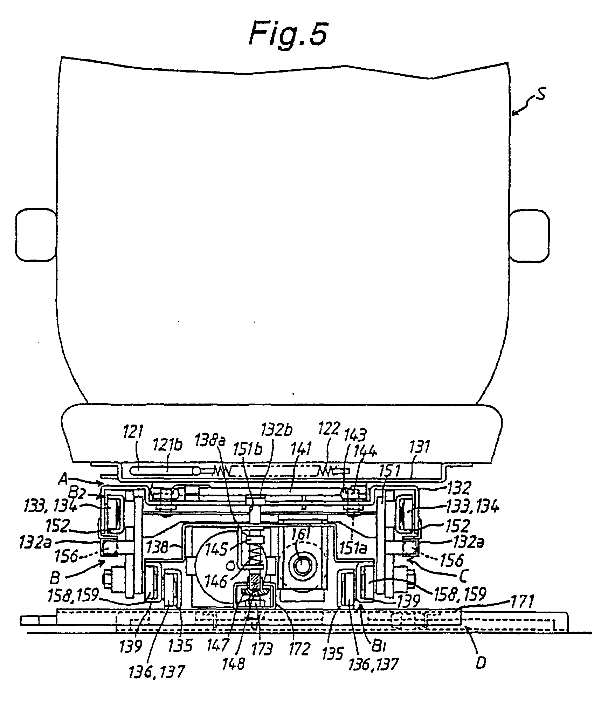

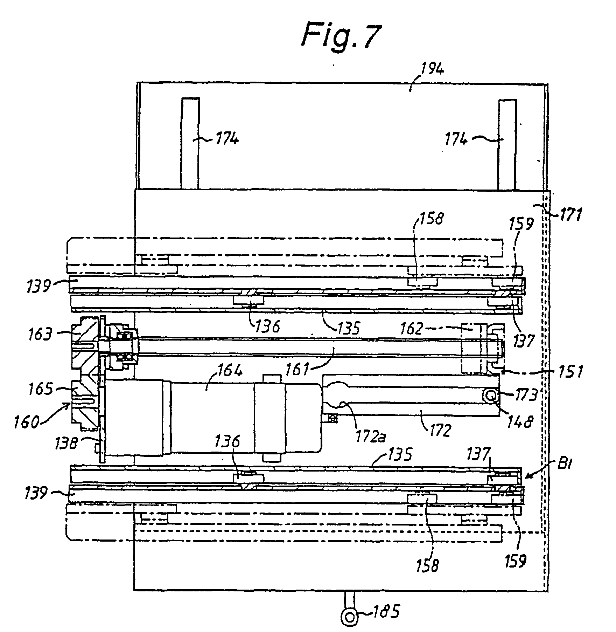

As shown in Figs. 2-8, the slide mechanism B is composed of a first slide mechanism B1 capable of moving the seat S, seat support mechanism A and lift mechanism C forward or backward on the compartment floor 193 and a second slide mechanism B2 capable of moving the seat S and seat support mechanism A forward or backward relative to the lift mechanism C. The first slide mechanism B1 includes a pair of lower parallel rail members 135 mounted on a bottom plate 171 in a lateral direction of the vehicle, a lower support frame 138 slidably supported on the rail members 135 through two pairs of spaced rollers 136 and 137 mounted thereto to be movable with the seat S, seat support mechanism A and lift mechanism C mounted thereon and a pair of guide rail members 139 assembled with the lower support frame 138. As shown in Fig. 7, the rollers 136, 137 are carried by the guide rail members 139, respectively. The second slide mechanism B2 includes a pair of upper parallel rails composed of a pair of rail portions integrally formed with a pair of upper link arm members 152 of the lift mechanism C and a pair of rail portions 154a integrally formed on a lift frame 154 pivotally connected to and aligned with the front ends of upper link arm members 152, the upper support plate 132 slidably supported on the upper parallel rail through two pairs of spaced rollers 133, 134 mounted thereto for support of the seat S and seat support mechanism A, and stoppers 156, 157 respectively secured to a slide base frame 151 and the lift frame 154 of lift mechanism C to define a displacement amount of the upper support plate 132 by engagement with a pair of stopper members 132a secured to the upper support plate 132 at opposite sides thereof. As shown in Figs. 3 and 5, the slide mechanism B further includes a slide locking mechanism 140 for restricting lateral movement of the seat S on the compartment floor 193. The slide locking mechanism 140 is composed of a seat locking device for releasably locking the seat S and seat support mechanism A on the upper support plate 132 to the slide base frame 151 at the backward position or the lift frame 154 at the forward position and a lift locking device for releasably locking the lift mechanism C on the lower support frame 138 to the bottom plate 171 at the backward position or the forward position.

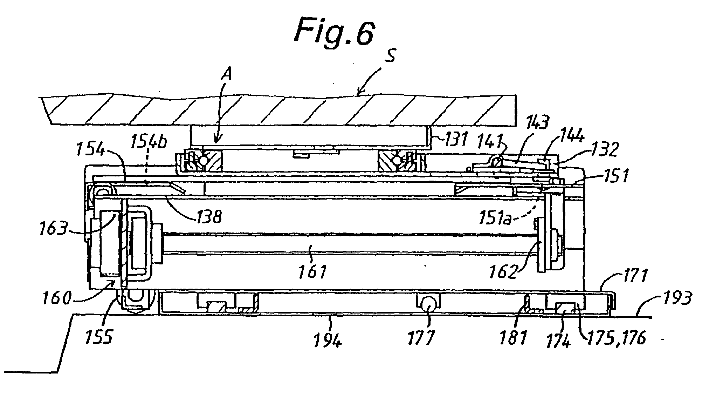

The seat locking device of the slide locking mechanism 140 includes a release shaft 141 rotatably mounted on the upper support plate 132 to be rotated by a crank portion 121b of handle shaft 121, a spring 142 engaged at its opposite ends with the release shaft 141 and the upper support plate 132 to bias the release shaft 141 in a clockwise direction in Fig. 6, a pair of laterally spaced release levers 143 integrally assembled with the release shaft 141 for rotation therewith, and a pair of upper lock pins 144 connected to the release levers 143 to be engaged with a pair of corresponding holes 151a of the slide base frame 151 or a pair of corresponding holes 154b of the lift frame 154 through a pair of corresponding through holes formed in the upper support plate 132.

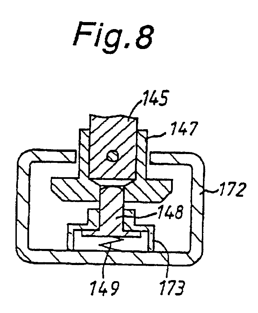

As shown in Figs. 5 and 8, the lift locking device of the slide locking mechanism 140 includes a vertical rod 145 assembled with a bracket 138a secured to the lower support frame 138 in such a manner as to be movable in a vertical direction and extending upward through a recess 151b formed on a rear end portion of slide base frame 151 for engagement with a projection 132b formed on a rear end portion of the upper support plate 132, a spring 146 engaged at its opposite ends with an annular flange of vertical rod 145 and the bracket 138a to bias the vertical rod 145 upward, a stepped lock sleeve 147 fixed to the lower end of vertical rod 145 by means of a pin for movement therewith to be engaged with a pair of opposed semi-circular recesses 172a formed on one end of a lock rail member 172 fixedly mounted on the bottom plate 171, a stepped lower lock pin 148 assembled with a bracket secured to an inner wall of the lock rail member 172 to be moved by engagement with the vertical rod 145, and a spring 149 disposed within the bracket 173 to bias the lower lock pin 148 upward. In operation, the lift locking device of the slide locking mechanism 140 is interlocked with lateral movement of the seat S as described later.

When the handle shaft 121 is retained in the neutral position as shown in Figs. 2 and 3 in a condition where the seat S is placed in the sideways position, the release shaft 141 and release levers 143 are placed in their return positions under the load of spring 142 to maintain engagement of the upper lock pins 144 with the corresponding holes 151a of slide base frame 151. In such a condition, the upper support plate 132 is fixed to the slide base frame 151, the vertical rod 145 is moved downward by engagement with the projection 132b of upper support plate 132 against the load of spring 146 to engage the lock sleeve 147 with the lower lock pin 148 as shown in Fig. 8, and the lower support frame 138 is fixed to the bottom plate 171 through the feed screw shaft 161 to lock the seat S at the sideways position.

When the handle shaft 121 is retained in the neutral position in a condition where the seat S has been moved forward from the sideways position as shown in Fig. 12, the release shaft 141 and release levers 143 are in their return positions under the load of spring 142 to maintain engagement of the upper lock pins 144 with the corresponding holes 154b of lift frame 154. In such a condition, the upper support plate 132 is fixed to the lift frame 154 connected to the slide base frame 151 through the upper link arm members 152 and lower link arm members 153 of the lift mechanism C, and the projection 132b of upper support plate 132 is disengaged from the vertical rod 145 such that the vertical rod 145 and lock sleeve 147 are moved upward under the load of spring 146. Thus, the lock sleeve 147 is engaged with the pair of opposed semi-circular recesses 172a of lock rail member 172, and the lower support frame 138 is fixed to the bottom plate 171 to lock lateral movement of the seat S at the forward position.

When the handle shaft 121 is rotated in a counterclockwise direction in Fig. 4 in a condition where the seat S is placed in the sideways position, the release shaft 141 and release levers 143 are rotated by the crank portion 121b of handle shaft 121 to release the upper support plate 132 from the slide base frame 151. Thus, the seat S can be moved forward from the sideways position or retracted to the sideways position. When the handle shaft 121 is rotated in a counterclockwise direction in Fig. 4 in a condition where the seat S is placed in the forward-facing position or the backward-facing position, the release shaft 141 and release levers 143 are maintained in their return positions since the crank portion 121b of handle shaft 121 is disengaged from the release lever 143.

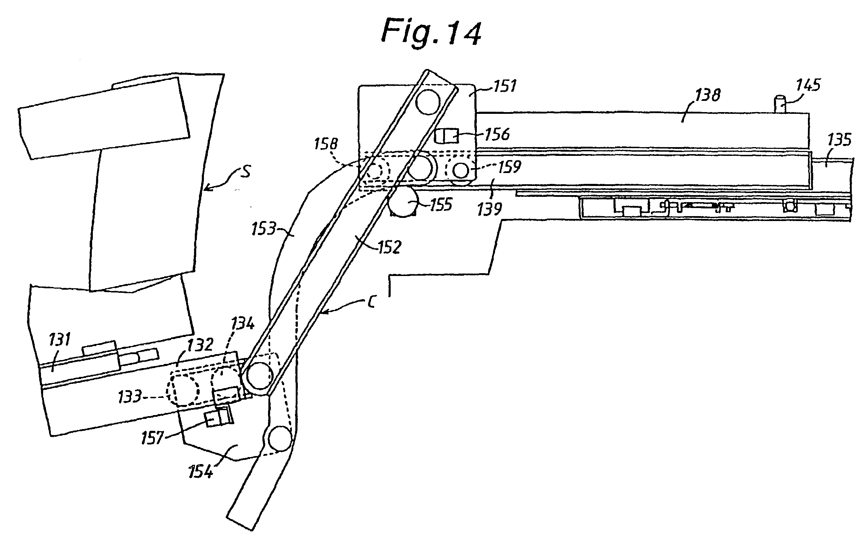

The lift mechanism C is composed of the slide base frame 151 movably supported on the guide rail members 139 by means of two pairs of spaced guide rollers 158, 159 mounted thereto, a pair of quadric linkage mechanisms composed of the pair of upper link arm members 152,pivotally mounted on an upper portion of the slide base frame 151 at their rear ends and extending horizontally in parallel with the guide rail members 139, the pair of arcuated lower link arm members 153 pivotally mounted on a lower portion of the slide base frame 151 their rear ends and extending in parallel with the guide rail members 139, the lift frame 154 pivotally connected to the front ends of the upper and lower link arm members 152 and 153, and a pair of guide pins 155 secured to front bottom surfaces of the guide rail members 139 and slidably engaged with the bottom surfaces of lower link arm members 153. The slide base frame 151 is moved by a drive mechanism 160 mounted on the lower support frame 138 along the guide rail members 139 to move the lift frame 154 as shown in Figs. 12 and 14.

As shown in Figs. 6 and 7, the drive mechanism 160 includes a feed screw shaft 161 rotatably mounted on the lower support frame 138 and extending in parallel with the guide rail members 139, a nut 162 secured to the bottom of slide base frame 151 and coupled with the feed screw shaft 161 to be moved along the feed screw shaft 161 by rotation thereof, a driven gear 163 mounted on the feed screw shaft 161 for rotation therewith, a reversible electric motor 164 assembled with the lower support frame 138, and a drive gear 165 mounted on an output shaft of electric motor 164 for rotation therewith and meshed with the driven gear 163. When the electric motor 164 is activated to rotate in a forward direction, the slide base frame 151 is moved from a position shown in Fig. 12 to a position shown in Fig. 14. When the electric motor 164 is activated to rotate in a reverse direction, the slide base frame 151 is retracted from the position shown in Fig. 14 to the position shown in Fig. 12.

In this embodiment, a distance between fulcrums of each of the lower link arm members 153 is determined to be shorter than a distance between fulcrums of each of the upper link arm members 152 in a condition where the seat S is placed in a lower position as shown in Fig. 14. With such an arrangement, a difference between swing locuses of the link arm members 152 and 153 causes the seat S to incline downward as shown in Fig.14 when the seat S is lowered by the quadric linkage mechanisms from the horizontal forward position shown in Fig. 12 to the lower position shown in Fig. 14.

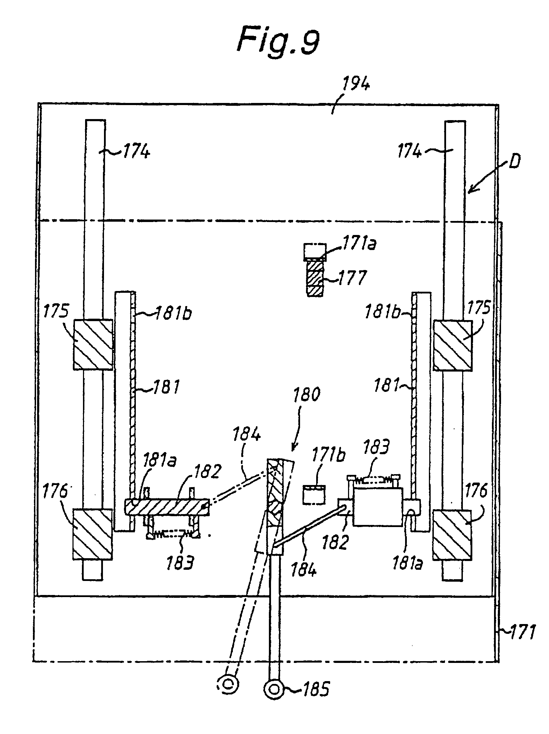

The shift mechanism D is provided to make sure of a sufficient leg space in front of the seat S when the seat S is place in the forward-facing position or the backward-facing position. As shown in Figs. 2 and 9, the shift mechanism D includes a pair of parallel rail members 174 mounted on the compartment floor 193 through a stationary base plate 194 in a fore-and-aft direction of the vehicle, two pairs of spaced slide blocks 175 and 176 secured to the bottom plate 171 and slidably supported on the rail members 174, a stopper 177 fixed to the stationary base plate 194 to restrict movement of the bottom plate 171 by engagement with a pair of spaced stopper members 171a and 171b secured to the bottom plate 171, and a shift locking mechanism 180 for releasably locking the bottom plate 171 to the stationary base plate 194.

The shift locking mechanism 180 includes a pair of lock plates 181 secured to the stationary base plate 194 and placed in parallel with the rail members 174, a pair of lateral lock members 182 assembled with the bottom plate 171 for engagement with each pair of spaced holes 181a and 181b formed in the lock plates 181, a pair of springs 183 for biasing the lock members 182 toward the lock plates 181, and a release lever 185 pivoted to the bottom plate 171 and connected to the lock members 182 through a link rod 184 respectively. When the release lever 185 is moved toward a position shown by imaginary lines in Fig. 9, the lock members 182 are disengaged from the holes 181a or 181b of lock plates 181 to permit forward or backward movement of the bottom plate 171.

Assuming that the handle shaft 121 in the seat lift mechanism has been rotated in a clockwise direction against the load of spring 122 in a condition where the seat S was placed in the sideways position as shown in Fig. 2, the lock pin 123 of the seat locking mechanism 120 is disengaged from the recess 112b of stationary ring 112 to permit rotation of the seat support plate 131 on the upper support plate 132. In such a condition, the seat S can be rotated from the sideways position to the forward-facing position or the backward-facing position and positioned in place when the handle shaft 121 is released. In this instance, the lock pin 123 is engaged with the recess 112a or 112c of stationary ring 112 under the load of spring 124 to retain the seat support plate 131 in place on the upper support plate 132. When the seat S is rotated from the forward-facing position or the backward-facing position to another position, the seat is positioned in place in the same manner as described above.

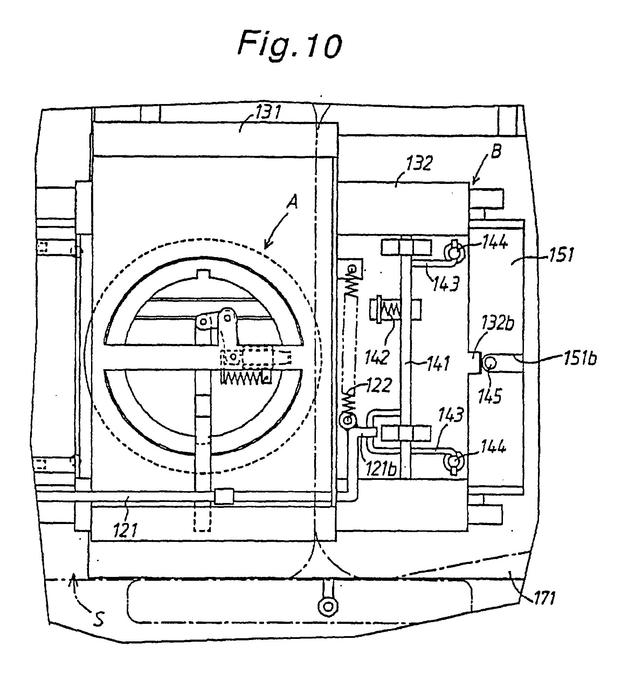

When the handle shaft 121 is rotated in a counterclockwise direction in a condition where the seat S is placed in the sideways position, the upper lock pins 144 of the slide locking device 140 are disengaged from the holes 151a of slide base frame 151 to permit forward movement of the upper support plate 132 on the slide base frame 151. In such a condition, the seat S can be moved forward with the seat support plate 131 and upper support plate 132 along the upper link arm members 152 and rail portions 154a of the lift frame 154. When the seat S is moved forward in a slight distance with the seat support plate 131 and upper support plate 132 as shown in Fig. 10, the projection 132b of upper support plate 132 is disengaged from the vertical rod 145, and in turn, the vertical rod 145 is moved upward under the load of spring 146 to release the lock sleeve 147 from the lower lock pin 148 and to permit forward movement of the lock sleeve 147 along the lock rail member 172. Thus, the slide base frame 151, link arm members 152, 153 and lift frame 154 can be moved forward with the lower support frame 138 on the rail members 135 mounted on the bottom plate 171. Thereafter, as shown in Fig. 12, the seat S is further moved forward with the seat support plate 131 and upper support plate 132 on the rails formed by the upper link arm members 152 and rail portions 154a of the lift frame 154, and the slide base frame 151, link arm members 152, 153 and lift frame 154 are moved forward with the lower support frame 138 on the rail members 135.

When the handle shaft 121 is released in a condition where the seat S, seat support plate 131 and upper support plate 132 have been moved to the forward position shown in Fig. 12, the upper lock pins 144 are-engaged with the holes 154b of lift frame 154 to fixedly connect the seat S to the lift frame 154 with the seat support plate 131 and upper support plate 132. In the condition shown in Fig. 12, the lock sleeve 147 is engaged with the pair of opposed semi-circular recesses 172a of lock rail member 172 under the load of spring 146 to fixedly connect the lower support frame 138 to the bottom plate 171. Thus, the seat S is retained in place at the forward position shown in Fig. 12.

When the electric motor 164 of drive mechanism 160 is activated to rotate forwardly in the condition shown in Fig. 12, the feed screw shaft 161 is driven by the electric motor 164 to move the slide base frame 151 along the rail members 139 so that the link arm members 152, 153 and lift frame 154 are lowered as shown in Fig. 14. As a result, the seat S is lowered out of the passenger compartment with the seat support plate 131 and upper support plate 132 as shown in Fig. 14. When the electric motor 164 of drive mechanism 160 is activated to rotate reversely, the seat S is lifted up to the forward position shown in Fig. 12.

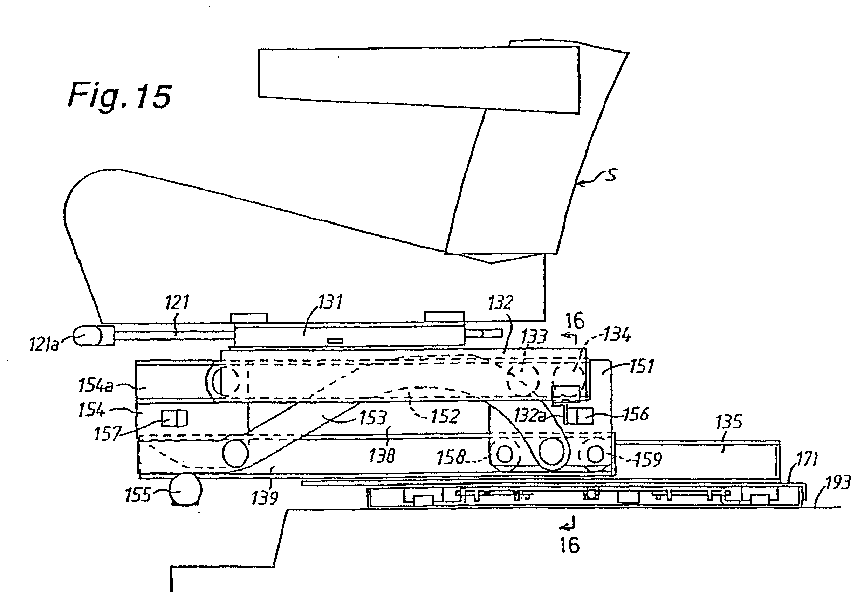

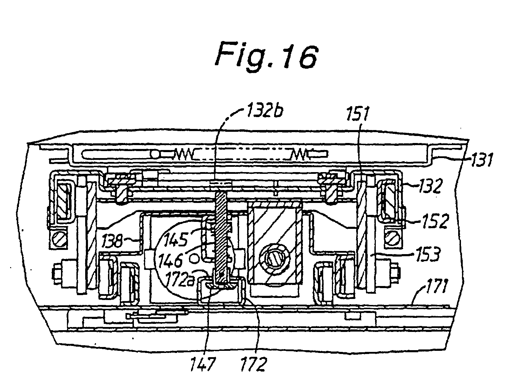

When the handle shaft 121 is rotated in a counterclockwise direction in a condition where the seat S has been placed in the forward position shown in Fig. 12, the upper lock pins 144 of slide locking device 140 are disengaged from the corresponding holes 154b of lift frame 154' to permit backward movement of the upper support plate 132 relative to the lift frame 154. Thus, the seat S can be moved backward with the seat support plate 131 and upper support plate 132 along the rails formed by the upper link arm members 152 and rail portions 154a of lift frame 154. When the upper support plate 132 is moved backward to a position shown in Fig. 15, the vertical rod 145 is moved downward by engagement with the projection 132b of upper support plate 132 against the load of spring 146 as shown in Fig. 16 to disengage the lock sleeve 147 from the pair of opposed semi-circular recesses 172a of lock rail member 172 thereby to permit backward movement of the lower support frame 138 relative to the bottom plate 171. Thereafter, the seat S is further moved backward with the seat support plate 131, upper support plate 132, slide base frame 151, link arm members 152, 153 and lift frame 154 along the rail members 135 to the sideways position shown in Fig. 2.

When the handle shaft 121 is released in a condition where the seat S has been placed in the sideways position shown in Fig. 2, the upper lock pins 144 are engaged with the corresponding holes 151a of slide base frame 151 to lock the seat S to the slide base frame 151 together with the seat support plate 131 and upper support plate 132. Thus, the seat S is retained in the sideways position shown in Fig. 2.

When the release lever 185 of shift locking mechanism 180 is operated to disengage the lock members 182 from the holes 181a or 181b of the lock plates 181 in a condition where the seat S has been rotated from the sideways position to the forward-facing position or the backward-facing position, the bottom plate 171 can be moved relative to the stationary base plate 194 in the fore-and-aft direction of the vehicle. When the bottom plate 171 is moved backward in a condition where the seat S has been placed in the forward-facing position or moved forward in a condition where the seat S has been placed in the backward-facing position, a sufficient leg space is obtained at the front of the seat S. When the release lever 185 is released in a condition where the bottom plate 171 has been moved backward or forward, the lock members 182 are engaged with the corresponding holes 181a or 181b of lock plates 181 under the load of springs 183 to lock the bottom plate 171 to the stationary base plate 194.

As is understood from the above description, the slide mechanism B capable of moving the seat S between the sideways position and the forward position is composed of the first slide mechanism B1 capable of moving the lift mechanism C between the sideways position and the forward position on the compartment floor 193 and the second slide mechanism B2 capable of moving the seat S relative to the lift mechanism C between the sideways position and the forward position. In operation, the first slide mechanism B1 causes the lift mechanism C to slide from the sideways position to the forward position, and the second slide mechanism B2 causes the seat S to slide the sideways position to the forward position. When it is desired to retract the seat S from the forward position to the sideways position, the second slide mechanism B2 causes the seat S to slide from the forward position to the sideways position, and the first slide mechanism B1 causes the lift mechanism C from the forward position to the sideways position. In a condition where the seat S has been retracted from the forward position to the sideways position, the seat S and lift mechanism C are placed in the sideways position as shown in Figs. 1 and 2 so that a sufficient space is obtained at the side door opening 192 of the vehicle to facilitate getting in and out of the vehicle compartment.

When the seat locking device in the slide locking mechanism 140 is released to permit movement of the seat S, the lift locking device in the slide locking mechanism 140 is interlocked with operation of the seat locking device to release the lift mechanism C. This is useful to operate the slide locking mechanism 140 in a simple manner.

In the above embodiment, the handle shaft 121 is rotated in a clockwise direction to release the seat locking mechanism 120 for permitting rotation of the seat S and is rotated in a counterclockwise directions to release the slide locking mechanism 140 for permitting forward or backward movement of the seat S. This is useful to move the seat S forward or backward in a simple manner after rotated it to the sideways position from the forward-facing position or the backward-facing position. In a condition where the seat S is placed in the forward-facing position or the backward-facing position, the slide locking mechanism 140 may not be released by operation of the handle shaft 121 to prevent lateral displacement of the seat S on the compartment floor 193.

Since the distance between the fulcrums of upper link arm member 152 is determined to be shorter than the distance between the fulcrums of lower link arm member 153, the seat S is tilted downward due to the difference between swing locuses of the link arm members 152 and 153 when it has been lowered by the quadric linkage mechanism as shown in Fig. 14. In the case that the seat cushion Sa of the seat S is raised at its front portion, the surface of the seat cushion Sa becomes horizontal to facilitate getting in and out of the vehicle compartment. As the front end of the seat cushion Sa is lowered by the quadric linkage mechanisms, the swing stroke of link arm members 152 and 153 for lowering the seat cushion Sa to a desired low level can be shortened. This is useful to provide the lift mechanism C in a small size.

In the above embodiment, the seat support mechanism A, slide mechanism B and lift mechanism Care assembled between the stationary base plate 194 and the seat cushion Sa of passenger seat S in a compact construction so that the back rest Sb of seat S can be tilted backward to be position at a desired angle. The space behind the back rest Sb of seat S can be utilized as a leg space for a passenger of a rear seat or a luggage space. Since in the above embodiment, the two pairs of spaced rollers 133 and 134 for support of the upper support plate 132 are supported on the pair of parallel rails integrally formed with the pair of upper link arm members 152 and the pair of rail portions 154a of lift frame 154, the whole construction of the seat lift mechanism can be formed to place the passenger seat S at a height position suitable for use in the vehicle compartment.

## Claims

1. A seat lift mechanism for an automotive vehicle comprising a seat support mechanism (A) capable of placing a passenger seat (S) mounted thereon in a sideways position where a front of said passenger seat is oriented toward a side door opening of the vehicle, a slide mechanism (B) capable of displacing said passenger seat placed in the sideways position to and from a forward position, and a lift mechanism (C) capable of lowering said passenger seat from the forward position to a lower position adjacent a ground surface through the side door opening and of lifting said passenger seat up to the forward position from the lower position,
**characterized in that** said seat support mechanism (A), said slide mechanism (B) and said lift mechanism (C) are arranged in a vertical direction between the seat cushion (Sa) of said passenger seat and a compartment floor (193) of the vehicle in a condition where said passenger seat is placed in the sideways position,
wherein said slide mechanism (B) comprises a first slide mechanism (B1) capable of displacing said passenger seat (S), said seat support mechanism (A) and said lift mechanism (C) placed in the sideways position toward and away from the forward position on the compartment floor and a second slide mechanism (B2) capable of displacing said passenger seat (S) and said seat support mechanism (A) placed in the sideways position toward and away from the forward position relative to said lift mechanism (C).

2. A seat lift mechanism as recited in claim 1, wherein said lift mechanism (C) comprises a pair of slide base frames (151) slidably mounted on the compartment floor of the vehicle in a lateral direction to be moved toward and away from the side door opening of the vehicle, a quadric linkage mechanism composed of a pair of parallel upper link arm members (152) pivotally connected at their rear ends to each upper portion of said slide base frames and placed horizontally in a displacement direction of said slide base frames and a pair of parallel lower link arm members (153) pivotally connected at their rear ends to each lower portion of said slide base frames to be moved in the displacement direction of said slide base frames,
wherein said first slide mechanism (B1) comprises a pair of lower parallel rail members (135) mounted on a bottom plate (171) in a lateral direction of the vehicle, a lower support frame (138) slidably supported on the lower parallel rail members (135) to be movable with said passenger seat (S), said seat support mechanism (A) and said lift mechanism (C), and
wherein said second slide mechanism (B2) comprises a pair of parallel rails integrally provided with said upper link arm members (152) and a lift frame (154) formed with a pair of parallel rail portions (154a) and pivotally connected to the front ends of said upper link arm members (152) and lower link arm members (153) to be aligned with the parallel rails of said upper link arm members (152) when said passenger seat (S) is placed in the sideways position.

3. A seat lift mechanism as recited in claim 2, wherein said seat support mechanism (A) comprises a seat support plate (131) for support of said passenger seat (S) slidably supported on the parallel rails of said upper link arm members (152) to be supported on the parallel rail portions (154a) of said lift frame when moved toward the side door opening of the vehicle, and a locking mechanism (140 ) for releasably locking said seat support plate (131) at the sideways position or the forward position of said passenger seat.

4. A seat lift mechanism as recited in claim 3, wherein a set of spaced rollers (133, 134) for support of said seat support plate (131) are slidably coupled within a pair of parallel channels formed on said pair of upper link arm members (152) to be coupled within a pair of parallel channels formed as the rail portions (154a) of said lift frame (154) when said passenger seat is moved to the forward position.

5. A seat lift mechanism as recited in any one of claims 2 to 4, wherein said first slide mechanism (B1) includes a lift locking mechanism (140) for releasably locking said lift mechanism (C ) at the sideways or forward position of said passenger seat, and said second slide mechanism (B2) includes a seat locking mechanism (120) for releasably locking said passenger seat at the sideways or forward position, and
wherein when said seat locking mechanism (120) is released to permit forward movement of said passenger seat placed in the sideways position, said lift locking mechanism (140) is interlocked with forward movement of said passenger seat to permit forward movement of said lift mechanism at the sideways position of said passenger seat and to lock said lift mechanism at the forward position of said passenger seat and is interlocked with backward movement of said passenger seat to permit backward movement of said lift mechanism at the forward position of said passenger seat and to lock said lift mechanism at the sideways position of said passenger seat.

6. A seat lift mechanism as recited in any one of claims 2 to 5, wherein a distance between fulcrums of each of the lower link arm members (153) is determined to be shorter than a distance between fulcrums of each of the upper link arm member (152) in a condition where said passenger seat is placed in the lower position.

## Patentansprüche

1. Ein Sitzhebemechanismus für ein Kraftfahrzeug, der einen Sitzhaltemechanismus (A), der einen darauf montierten Fahrgastsitz (S) in einer seitlichen Position anordnen kann, bei der eine Vorderseite des Fahrgastsitzes in Richtung einer Seitentüröffnung des Fahrzeugs ausgerichtet ist, einen Gleitmechanismus (B), der den in der seitlichen Position angeordneten Fahrgastsitz zu und von einer vorderen Position verschieben kann, und einen Hebemechanismus (C) umfasst, der den Fahrgastsitz von der vorderen Position zu einer niedrigeren Position angrenzend an eine Bodenfläche durch die Seitentüröffnung absenken kann, und der den Fahrgastsitz von der niedrigeren Position zu der vorderen Position heben kann, **dadurch gekennzeichnet, dass** der Sitzhaltemechanismus (A), der Gleitmechanismus (B) und der Hebemechanismus (C) in einem Zustand, bei dem der Fahrgastsitz in der seitlichen Position angeordnet ist, in einer vertikalen Richtung zwischen dem Sitzkissen (Sa) des Fahrgastsitzes und einem Raumboden (193) des Fahrzeugs angeordnet sind,
wobei der Gleitmechanismus (B) einen ersten Gleitmechanismus (B1), der den Fahrgastsitz (S), den Sitzhaltemechanismus (A) und den Hebemechanismus (C), die in der seitlichen Position angeordnet sind, zu der vorderen Position und von dieser weg auf dem Raumboden verschieben kann, und einen zweiten Gleitmechanismus (B2) umfasst, der den Fahrgastsitz (S) und den Sitzhaltemechanismus (A), die in der seitlichen Position angeordnet sind, zu der vorderen Position und von dieser weg relativ zum Hebemechanismus (C) verschieben kann.

2. Sitzhebemechanismus nach Anspruch 1, bei dem der Hebemechanismus (C) ein Paar von Gleitbasisrahmen (151), die zum Bewegen zu der Seitentüröffnung des Fahrzeugs und von dieser weg verschiebbar auf dem Raumboden des Fahrzeugs in einer lateralen Richtung montiert sind, und einen quadrischen Verbindungsmechanismus umfasst, der aus einem Paar von parallelen oberen Verbindungsarmelementen (152), die schwenkbar an ihren hinteren Enden mit jedem oberen Abschnitt der Gleitbasisrahmen verbunden sind und horizontal in einer Verschiebungsrichtung der Gleitbasisrahmen angeordnet sind, und einem Paar von parallelen unteren Verbindungsarmelementen (153) zusammengesetzt ist, die zum Bewegen in der Verschiebungsrichtung der Gleitbasisrahmen schwenkbar an ihren hinteren Enden mit jedem unteren Abschnitt der Gleitbasisrahmen verbunden sind,
wobei der erste Gleitmechanismus (B1) ein Paar von unteren parallelen Schienenelementen (135), die auf einer Bodenplatte (171) in einer lateralen Richtung des Fahrzeugs montiert sind, und einen unteren Halterahmen (138) umfasst, der verschiebbar auf den Schienenelementen (135) gehalten ist, so dass er mit dem Fahrgastsitz (S), dem Sitzhaltemechanismus (A) und dem Hebemechanismus (C) bewegbar ist, und
wobei der zweite Gleitmechanismus (B2) ein Paar von parallelen Schienen, die integral mit den oberen Verbindungsarmelementen (152) bereitgestellt sind, und einen Heberahmen (154) umfasst, der mit einem Paar von parallelen Schienenabschnitten (154a) ausgebildet und schwenkbar mit den vorderen Enden der oberen Verbindungsarmelemente (152) und der unteren Verbindungsarmelemente (153) verbunden ist, so dass er mit den parallelen Schienen der oberen Verbindungsarmelemente (152) ausgerichtet ist, wenn der Fahrgastsitz S in der seitlichen Position angeordnet ist.

3. Sitzhebemechanismus nach Anspruch 2, bei dem der Sitzhaltemechanismus (A) eine Sitzhalteplatte (131) zum Halten des Fahrgastsitzes (S), die verschiebbar auf den parallelen Schienen der oberen Verbindungsarmelemente (152) gehalten sind, die auf den parallelen Schienenabschnitten (154a) des Heberahmens gehalten sind, wenn sie in Richtung der Seitentüröffnung des Fahrzeugs bewegt werden, und einen Verriegelungsmechanismus (140) zum lösbaren Verriegeln der Sitzhalteplatte (131) an der seitlichen Position oder der vorderen Position des Fahrgastsitzes umfasst.

4. Sitzhebemechanismus nach Anspruch 3, bei dem ein Satz von beabstandeten Rollen (133, 134) zum Halten der Sitzhalteplatte (131) verschiebbar innerhalb eines Paars paralleler Kanäle gekoppelt ist, die auf dem Paar von oberen Verbindungsarmelementen (152) ausgebildet sind, die innerhalb eines Paars paralleler Kanäle gekoppelt werden sollen, die als die Schienenabschnitte (154a) des Heberahmens (154) ausgebildet sind, wenn der Fahrgastsitz in die vordere Position bewegt wird.

5. Sitzhebemechanismus nach einem der Ansprüche 2 bis 4, bei dem der erste Gleitmechanismus (B1) einen Hebeverriegelungsmechanismus (140) zum lösbaren Verriegeln des Hebemechanismus (C) an der seitlichen oder vorderen Position des Fahrgastsitzes umfasst, und bei dem der zweite Gleitmechanismus (B2) einen Sitzverriegelungsmechanismus (120) zum lösbaren Verriegeln des Fahrgastsitzes an der seitlichen oder der vorderen Position umfasst, und
wobei dann, wenn der Sitzverriegelungsmechanismus (120) zum Ermöglichen einer Vorwärtsbewegung des Fahrgastsitzes, der in der seitlichen Position angeordnet ist, freigegeben wird, der Hebeverriegelungsmechanismus (140) mit der Vorwärtsbewegung des Fahrgastsitzes zusammengeschlossen ist, und zwar zum Ermöglichen einer Vorwärtsbewegung des Hebemechanismus bei der seitlichen Position des Fahrgastsitzes, und zum Verriegeln des Hebemechanismus bei der vorderen Position des Fahrgastsitzes, und mit der Rückwärtsbewegung des Fahrgastsitzes zusammengeschlossen ist, und zwar zum Ermöglichen einer Rückwärtsbewegung des Hebemechanismus bei der vorderen Position des Fahrgastsitzes und zum Verriegeln des Hebemechanismus bei der seitlichen Position des Fahrgastsitzes.

6. Sitzhebemechanismus nach einem der Ansprüche 2 bis 5, bei dem ein Abstand zwischen den Drehpunkten jedes der unteren Verbindungsarmelemente (153) so festgelegt ist, dass er kürzer ist als der Abstand zwischen den Drehpunkten jedes der oberen Verbindungsarmelemente (152) in einem Zustand, bei dem der Fahrgastsitz in der unteren Position angeordnet ist.

## Revendications

1. Un mécanisme élévateur de siège de véhicule automobile comprenant un mécanisme de support (A) de siège capable de placer un siège passager (S), monté sur le mécanisme, dans une position latérale où l'avant dudit siège passager est orienté vers une ouverture de la porte latérale du véhicule, un mécanisme de glissière (B) capable de déplacer ledit siège passager placé dans la position latérale vers ou depuis une position avant, et un mécanisme élévateur (C) capable d'abaisser ledit siège passager de la position avant vers une position inférieure adjacente à une surface au sol, par l'ouverture de la porte latérale et de relever ledit siège passager de la position inférieure jusqu'à la position avant,
**caractérisé en ce que** ledit mécanisme de support de siège (A), ledit mécanisme de glissière (B) et ledit mécanisme élévateur (C) sont disposés en direction verticale entre le coussin (Sa) dudit siège passager et le plancher (193) de l'habitacle du véhicule, dans une position telle que ledit siège passager soit placé en position latérale,
dans lequel ledit mécanisme de glissière (B) comprend un premier mécanisme de glissière (B1) capable de déplacer ledit siège passager (S), ledit mécanisme de support de siège (A) et ledit mécanisme élévateur (C) placé en position latérale vers ou depuis une position avant sur le plancher de l'habitacle du véhicule et un deuxième mécanisme de glissière (B2) capable de déplacer ledit siège passager (S) et ledit mécanisme de support de siège (A) placé en position latérale vers et en s'éloignant de la position avant par rapport audit mécanisme élévateur (C).

2. Un mécanisme élévateur de siège selon la revendication 1, dans lequel en ce que ledit mécanisme élévateur (C) comprend une paire de châssis de support de glissière (151) montés de façon coulissante sur le plancher de l'habitacle du véhicule dans une direction latérale pour être déplacés vers ou depuis l'ouverture de la porte latérale du véhicule, un mécanisme de liaison quadrique composé d'une paire d'éléments de bras de liaison supérieurs parallèles (152) raccordés de façon pivotante à leurs extrémités arrière à chaque partie supérieure desdits châssis de support de glissière et placés horizontalement dans une direction de déplacement desdits châssis de support de glissière et d'une paire d'éléments de bras de liaison inférieurs parallèles (153) raccordés de façon pivotante à leurs extrémités arrière à chaque partie inférieure desdits châssis de support de glissière pour être déplacés dans la direction de déplacement desdits châssis de support de glissière,
dans lequel ledit premier mécanisme de glissière (B1) comprend une paire d'éléments de rail parallèles inférieurs (135) montés sur une plaque de fond (171) dans une direction latérale du véhicule, un châssis de support inférieur (138) supporté de façon coulissante sur les éléments de rail parallèles inférieurs (135) pour pouvoir être déplacé avec ledit siège passager (S), ledit mécanisme de support de siège (A) et ledit mécanisme élévateur (C) et
dans lequel ledit deuxième mécanisme de glissière (B2) comprend une paire de rails parallèles prévus monobloc avec lesdits éléments de bras de liaison supérieurs (152) et un châssis élévateur (154) formé de deux parties de rails parallèles (154a) et assemblés de façon pivotante aux extrémités avant desdits éléments de bras de liaison supérieurs (152) et desdits éléments de bras de liaison inférieurs (153) pour être alignés avec les rails parallèles desdits éléments de bras de liaison supérieurs (152) lorsque ledit siège passager (S) est placé dans la position latérale.

3. Un mécanisme élévateur de siège selon la revendication 2, **caractérisé en ce que** ledit mécanisme de support de siège (A) comprend une plaque de support de siège (131) pour supporter ledit siège passager (S) supporté de façon coulissante sur les rails parallèles desdits éléments de bras de liaison supérieurs (152) pour être supporté sur les parties de rails parallèles (154a) dudit châssis élévateur lorsqu'il est déplacé vers l'ouverture de la porte latérale du véhicule, et un mécanisme de verrouillage (140) pour verrouiller de façon amovible ladite plaque de support de siège (131) en position latérale ou en position avant dudit siège passager.

4. Un mécanisme élévateur de siège selon la revendication 3, **caractérisé en ce qu'**un ensemble de galets espacés (133, 134) pour supporter ladite plaque de support du siège (131) est couplé de façon coulissante à une paire de rainures parallèles formées sur ladite paire d'éléments de bras de liaison supérieurs (152) pour être couplé dans deux rainures parallèles formées comme des parties de rail (154a) dudit châssis élévateur (154) lorsque ledit siège passager est déplacé vers la position avant.

5. Un mécanisme élévateur de siège selon l'une quelconque des revendications 2 à 4, dans lequel ledit premier mécanisme de glissière (B1) inclut un mécanisme de verrouillage de l'élévateur pour verrouiller au relâchement ledit mécanisme (140) de réglage de la hauteur (C) en position latérale ou vers l'avant dudit siège passager, et ledit deuxième mécanisme de glissière (B2) inclut un mécanisme (120) de verrouillage du siège pour verrouiller de façon amovible ledit siège passager en position latérale ou en position avant, et
dans lequel ledit mécanisme (120) de verrouillage de siège est débloqué pour permettre un mouvement vers l'avant dudit siège passager placé dans la position latérale, ledit mécanisme (140) de verrouillage de l'élévateur est interverrouillé par le mouvement vers l'avant dudit siège passager pour permettre le déplacement vers l'avant dudit mécanisme élévateur en position latérale dudit siège passager et pour verrouiller ledit mécanisme élévateur en position avant dudit siège passager, et est interverrouillé par le mouvement vers l'arrière dudit siège passager pour permettre le déplacement vers l'arrière dudit mécanisme élévateur en position avant dudit siège passager et pour verrouiller ledit mécanisme élévateur en position latérale dudit siège passager.

6. Un mécanisme élévateur de siège selon l'une quelconque des revendications 2 à 5, dans lequel la distance entre les centres de pivotement de chacun des éléments de bras de liaison inférieurs (153) est déterminée pour être plus courte que la distance entre les centres de pivotement de chacun des éléments de bras de liaison supérieurs (152) dans l'état où ledit siège passager est placé dans la position inférieure.
